# EUROPÄISCHE PATENTSCHRIFT

(11) **EP 1 765 909 B1**
(45) Veröffentlichungstag und Bekanntmachung des Hinweises auf die Patenterteilung: **24.02.2010**
(21) Anmeldenummer: 05754717.6
(22) Anmeldetag: 18.06.2005
(51) Int. Cl.: C08G 64/30, C08G 64/02

(54) **OLIGOCARBONATPOLYOLE MIT ENDSTÄNDIG SEKUNDÄREN HYDROXYLGRUPPEN**
OLIGOCARBONATE POLYOLS COMPRISING TERMINAL SECONDARY HYDROXYL GROUPS
POLYOLS OLIGOCARBONATES COMPORTANT DES GROUPES HYDROXYL SECONDAIRES TERMINAUX

(30) Priorität: 01.07.2004 DE 102004031900
(43) Veröffentlichungstag der Anmeldung: 28.03.2007
(73) Patentinhaber: Bayer MaterialScience AG, 51368 Leverkusen (DE)
(72) Erfinder: HOFACKER, Steffen, 51519 Odenthal (DE)
(86) Internationale Anmeldenummer: PCT/EP2005/006602
(87) Internationale Veröffentlichungsnummer: WO 2006/002787

(56) Entgegenhaltungen:
- EP-A- 1 288 241
- US-B1- 6 566 563
- PATENT ABSTRACTS OF JAPAN Bd. 012, Nr. 040 (C-474), 5. Februar 1988 (1988-02-05) & JP 62 187725 A (DAICEL CHEM IND LTD), 17. August 1987 (1987-08-17)

## Beschreibung

Die vorliegende Erfindung betrifft ein Verfahren zur Herstellung von aliphatischen Oligocarbonatpolyolen mit endständig sekundären Hydroxylgruppen durch Umesterung von organischen Carbonaten mit aliphatischen Polyolen.

Oligocarbonatdiole können prinzipiell aus aliphatischen Polyolen durch Umsetzung mit Phosgen, bis-Chlorkohlensäureestern, Diarylcarbonaten, cyclischen Carbonaten oder Dialkylcarbonaten hergestellt werden. Sie sind wichtige Vorprodukte zur Herstellung von Kunststoffen, Lacken und Klebstoffen. Sie werden z.B. mit Isocyanaten, Epoxiden, (cyclischen) Estern, Säuren oder Säureanhydriden umgesetzt.

DE-A 101 30 882 lehrt beispielsweise, dass aliphatische Oligocarbonatdiole durch Umsetzung von Dimethylcarbonat mit aliphatischen Diolen unter Druck erhältlich sind. Bei den dort offenbarten Diolen handelt es sich ausschließlich um solche mit primären Hydroxylfunktionen, so dass ausschließlich aliphatische Oligobarbonate zugänglich sind, welche endständig primäre Hydroxylgruppen tragen.

Darüberhinaus offenbart DE-A 101 56 896, dass zur Herstellung von aliphatischen Oligocarbonatpolyolen durch Umesterung von organischen Carbonaten auch Polyole mit sekundären oder tertiären Hydroxylgruppen eingesetzt werden können. Über eine getrennte, stufenweise Zuführung von Polyolen mit primären und solchen mit sekundären OH-Gruppen ist nichts beschrieben.

Nachteilig bei den Herstellverfahren, die aus dem Stand der Technik bekannt sind, ist jedoch, dass bei Verwendung von Polyolen mit sekundären Hydroxylfunktionen eine Umesterung mit organischen Carbonaten nur mit geringem Umsatz erfolgt, was zur Folge hat, dass keine Oligocarbonatpolyole mit mittleren Molekulargewichten größer 500 g/mol hergestellt werden können bzw. diese nur dann zugänglich sind, wenn extrem lange Umesterungszeiten in Kauf genommen werden. Die Herstellung wird damit aufgrund der resultierenden schlechten Raum-Zeit-Ausbeute unwirtschaftlich.

Andererseits sind Oligocarbonatpolyole mit endständigen sekundären Hydroxylgruppen als Reaktionspartner für hochreaktive (Poly-)Isocyanate beispielsweise bei der Herstellung aromatischer Polyisocyanatprepolymere oder zur Steuerung der Urethanisierungsreaktion über unterschiedliche OH-Reaktivitäten von großem Interesse.

Aufgabe der vorliegenden Erfindung war es daher, ein wirtschaftlich einsetzbares Verfahren zur Herstellung von aliphatischen Oligocarbonatpolyolen mit endständigen sekundären Hydroxylgruppen bereitzustellen.

Diese Aufgabe konnte nun durch das nachfolgend beschriebene mehrstufige Verfahren gelöst werden.

Gegenstand der Erfindung ist ein Verfahren zur Herstellung von aliphatischen Oligocarbonatpolyolen mit sekundären OH-Gruppen, welche zahlenmittlere Molekulargewichte ≥ 500 g/mol aufweisen, bei dem
A) zurächst durch Umsetzung von überschüssigen Mengen organischer Carbonate mit Polyolen, welche ausschließlich primäre OH-Gruppen aufweisen, ein Polymer mit einer durchschnittlichen Konzentration an OH-Gruppen von ≤ 0,3 mol-% bezogen auf 1 mol des so erhältlichen Umsetzungsproduktes hergestellt wird,
B) die dabei freigesetzten Spaltprodukte gleichzeitig mit der Umesterungsreaktion oder anschließend zusammen mit überschüssigem, nicht umgesetzten Carbonat abgetrennt werden und in einem weiteren Schritt
C) das so gebildete Polymer mit aliphatischen Polyolen, welche jeweils pro Molekül wenigstens eine sekundäre OH-Gruppe aufweisen, umgesetzt wird, so dass ein Produkt erhalten wird, welches im Durchschnitt ≥ 5 mol-% an sekundären OH-Gruppen bezogen auf die Summe aller vorliegenden OH-Gruppen aufweist.

Bevorzugt weist das Polymer aus Stufe A) durchschnittlich weniger als 0,2 mol-%, besonders bevorzugt ≤ 0,1 mol-%, ganz besonders bevorzugt 0 - 0,05 mol-% an OH-Gruppen auf.

Das nach Schritt C) erhaltene Oligocarbonatpolyol weist einen Gehalt an sekundären OH-Gruppen bezogen auf die Summe aller OH-Gruppen von bevorzugt ≥ 5 mol-%, besonders bevorzugt ≥ 30 mol-%, ganz besonders bevorzugt 60 - 95 mol-% auf.

Die nach Schritt C) erhaltenen Oligocarbonatpolyole weisen typischerweise zahlenmittlere Molekulargewichte von 500 bis 5000 g/mol, bevorzugt 500 bis 3000 g/mol, besonders bevorzugt 750 bis 2500 g/mol auf.

Die nach Schritt C) erhaltenen Oligocarbonatpolyole weisen typischerweise mittlere OH-Funktionalitäten von ≥ 1,80, bevorzugt ≥ 1,90, besonders bevorzugt 1,90 bis 5,0 auf.

Als organische Carbonate können in Stufe A) z.B. Aryl-, Alkyl-, Alkylencarbonate oder deren beliebige Mischungen eingesetzt werden. Als Beispiele seien Diphenylcarbonat (DPC), Dimethylcarbonat (DMC), Diethylcarbonat (DEC) und Ethylencarbonat genannt. Bevorzugt werden Diphenylcarbonat, Dimethylcarbonat und Diethylcarbonat eingesetzt. Ganz besonders bevorzugt werden Diphenylcarbonat und Dimethylcarbonat verwendet.

Als primäre aliphatische Polyole werden in Stufe A) typischerweise Verbindungen mit 4 bis 50 C-Atomen in der Kette (verzweigt und/oder unverzweigt) eingesetzt, wobei die Kette auch durch zusätzliche Heteroatome wie Sauerstoff (O), Schwefel (S) oder Stickstoff (N) unterbrochen sein kann. Diese in A) eingesetzten Polyole weisen bevorzugt OH-Funktionalitäten von 2 bis 8, besonders bevorzugt 2 bis 4 auf.

Beispiele geeigneter aliphatischer primärer Polyole sind 1,4-Butandiol, 1,5-Pentandiol, 1,6-Hexandiol, 1,7-Heptandiol, 1,12-Dodecandiol, Cyclohexandimethanol, 3-Methyl-1,5-Pentandiol, 2,4-Diethyl-1,5-Pentandiol, Bis-(2-hydroxyethyl)-ether, Bis-(6-hydroxyhexyl)-ether, Dimerdiol, Trimethylolpropan, Pentaerythrit oder kurzkettige Polyetherpolyole mit primären Hydroxylgruppen und einem zahlenmittleren Molekulargewicht ≤ 700 g/mol sowie Mischungen daraus.

Weiterhin können die Additionsprodukte oder Mischungen der genannten aliphatischen primären Polyole mit Lactonen (cyclische Ester) wie ε-Caprolacton oder Valerolacton eingesetzt werden.

Als aliphatische Polyole mit mindestens einer sekundären Hydroxylgruppe, welche in Stufe C) eingesetzt werden, sind typischerweise Verbindungen mit 4 bis 50 C-Atomen in der Kette (verzweigt und/oder unverzweigt), wobei die Kette auch durch zusätzliche Heteroatome wie Sauerstoff (O), Schwefel (S) oder Stickstoff (N) unterbrochen sein kann. Diese in.C) eingesetzten Polyole weisen bevorzugt OH-Funktionalitäten von 2 bis 8, besonders bevorzugt 2 bis 4 auf.

Beispiele derartiger aliphatischer Polyole mit mindestens einer sekundären Hydroxylgruppe sind 1,2-Propandiol, 1,3-Butandiol, 1,2-Pentandiol, 1,3-Petandiol, 1,4-Pentandiol, 2,3-Pentandiol, 2,4-Pentandiol, 1,2-Hexandiol, 1,3-Hexandiol, 1,4-Hexandiol, 1,5-Hexandiol, 2,3-Hexandiol, 2,4-Hexandiol, 2,5-Hexandiol, 2,2,4-Trimethylpentan-1,3-diol, 2,2-Bis-(4-hydroxycyclohexyl)-propan, Glucose, Sorbit, kurzkettige Polyetherpolyole mit sekundären Hydroxylgruppen und einem zahlenmittleren Molekulargewicht ≤ 700 g/mol sowie Mischungen daraus.

Zusätzlich können im erfindungsgemäßen Verfahren alle aus dem Stand der Technik bekannten Verbindungen eingesetzt werden, die eine Umesterung katalysieren. Insbesondere eignen sich für das Verfahren Hydroxide, Oxide, Metallalkoholate, Carbonate, metallorganische Verbindungen und Komplexverbindungen der Metalle der I., II., III. und IV. Hauptgruppe des Periodensystems der Elemente nach Mendelejew, der II. und IV. Nebengruppe inklusive der Selten Erden, insbesondere die Verbindungen des Titans, Zirkoniums, Bleis, Zinns, Antimons Yttriums und des Ytterbiums.

Als Beispiele seien die Katalysatoren LiOH, Li₂CO₃, K₂CO₃, Mg₅(OH)₂(CO₃)₄, Titantetraalkoholate, Dibutylzinndilaurat, Dibutylzinnoxid, Bistributylzinnoxid, Yttrium(III)acetylacetonat und Ytterbium(III)acetylacetonat genannt.

Für den Fall des Einsatzes von Umesterungskatalysatoren, werden bevorzugt Mg₅(OH)₂(CO₃)₄, Titantetraalkoholate, Dibutylzinndilaurat, Yttrium(III)acetylacetonat und Ytterbium(III)acetylacetonat eingesetzt.

Im Falle einer Verwendung eines Katalysators liegt dessen Konzentration bei 0,01 ppm bis 1000 ppm (Anteil des Metalls bezogen auf das resultierende erfindungsgemäße Oligocarbonatpolyol), bevorzugt bei 0,01 ppm bis 500 ppm und besonders bevorzugt bei 0,1 ppm bis 300 ppm.

Das erfindungsgemäße Verfahren wird bei Temperaturen von typischerweise 50 bis 250°C, bevorzugt 100 bis 200°C und Drücken von 0,01 bis 10 bar (absolut), bevorzugt 0,05 bis 6 bar (absolut) durchgeführt.

Stufe C) des erfindungsgemäßen Verfahrens wird solange durchgeführt, bis die experimentell ermittelte Hydroxylfunktionalität > 90 %, bevorzugt > 95 % des theoretischen Wertes erreicht hat.

Zur Beschleunigung der Reaktion in Stufe C) ist es möglich, erneut einen Umesterungskatalysator zuzusetzen und/oder die Reaktion bei einem Druck < 1013 mbar (absolut) zu fahren.

Die in der Stufe A) eingesetzte Menge an organischem Carbonat bzw. der entsprechenden Polyole richtet sich nach dem gewünschten zahlenmittleren Molekulargewicht (Mₙ) des herzustellenden Oligocarbonatpolyols.

Dabei ist es wesentlich, dass die organischen Carbonate in A) stets im Überschuss bezogen auf die vorliegenden primären OH-Gruppen der Polyole eingesetzt werden, damit auch nach Stufe A) ein im wesentlichen OH-gruppenfreies Polymer mit den vorstehend genannten OH-Gruppengehalten resultieren kann. Typischerweise beträgt der Überschuss des organischen Carbonats 5 bis 100 mol-%, bevorzugt 10 bis 50 mol-% bezogen auf die notwendige Stöchiometrie zur Herstellung der theoretischen OH-funktionellen Verbindung.

Die Umesterung in Stufe A) des erfindungsgemäßen Verfahrens von primärem aliphatischen Polyol und organischem Carbonat kann auch in Teilschritten erfolgen, so dass das organische Carbonat schrittweise zu dem primären aliphatischen Polyol zugegeben wird und zwischenzeitlich das Nebenprodukt ggf. bei Drücken kleiner 1 bar (absolut) entfernt wird. Ebenso ist eine kontinuierliche Zudosierung von organischem Carbonat gepaart mit einer kontinuierlichen Entfernung des Nebenproduktes möglich.

Typischerweise beträgt die Reaktionszeit in Stufe A) 5 bis 100 h, bevorzugt 10 bis 80 h. Typischerweise beträgt die Reaktionszeit in Stufe C) 1 bis 50 h, bevorzugt 5 bis 25 h.

Die nach dem erfindungsgemäßen Verfahren erhältlichen Oligocarbonatpolyole eignen sich besonders zur Herstellung von Beschichtungen, Dispersionen, Verklebungen und Abdichtungen.

Grundsätzlich können solche Beschichtungen, Dispersionen, Verklebungen und Abdichtungen auf alle bekannten Substrate aufgebracht und ausgehärtet werden.

### Beispiele

Die Bestimmung des Anteils an endständig sekundären Hydroxylgruppen im Oligocarbonatdiol, wie auch der Hydroxylfunktionalität erfolgte durch integrale Auswertung von ¹H-NMR-Spektren der entsprechenden Produkte. Als Zielverbindung wurde dabei jeweils die sich anhand der gewählten Stöchiometrie ergebende Idealstruktur zugrunde gelegt. Zunächst wurde dann das zahlenmittlere Molekulargewicht (Mₙ) des jeweiligen Produktes anhand der Integrationen der Protonenresonanzen der sich wiederholenden Einheiten im Molekül berechnet. Hierfür dienten die Signale der Methylengruppen aus den eingesetzten Diolen, wobei die Methylen-Endgruppe der CH₂-OH Gruppe des Oligocarbonatdiols zur Normierung herangezogen wurde. In gleicher Weise wurde über Integration der entsprechenden Signale und Normierung auf die Methylenendgruppen der Anteil der nicht hydroxylfunktionellen Endgruppen bestimmt (im wesentlichen Methylester und Methylethergruppen). Die Summe aus Molekulargewicht des gewünschten Oligocarbonatdiols und Molekulargewicht der Verbindungen mit nicht hydroxyfunktionellen Endgruppen (Kettenabbrecher) ergibt das Gesamtmolekulargewicht. Die Anteile der Kettenabbrecher in der Gesamtverbindung ergeben sich entsprechend rechnerisch in mol-%. Die zu bestimmende tatsächliche Funktionalität stellt die Differenz von theoretischer Maximalfunktionalität und Gehalt an Kettenabbrechern dar. Der Anteil an endständig sekundären Hydroxylgruppen wurde analog ermittelt.

Die Bestimmung der Hydroxylzahl (OHZ) erfolgte gemäß DIN 53240-2.

Das zahlenmittlere Molekulargewicht (Mₙ) ergibt sich rechnerisch aus der Beziehung zwischen Hydroxylzahl und Funktionalität.

Die Viskositätsbestimmung erfolgte mittels Rotationsviskosimeter VISKOLAB LC-3/ISO der Fa. Physika, Deutschland gemäß DIN EN ISO 3219

### Beispiele 1:

295,9 g 1,6-Hexandiol wurden in einem Mehrhalskolben mit Rührer und Rückflusskühler auf 120°C aufgeheizt und 2 h bei 20 mbar entwässert. Anschließend wurde unter Stickstoffbeschleierung das Ölbad auf 110°C abgekühlt, 0,08 g Ytterbium(III)acetylacetonat zugesetzt und innerhalb von 20 Minuten 363,9 g Dimethylcarbonat zudosiert. Nach erfolgter Zugabe wurde das Reaktionsgemisch 24 h unter Rückfluss gehalten.

Danach erfolgte eine Destillation des Reaktionsgemisches, wobei das Nebenprodukt Methanol aber auch Anteile von Dimethylcarbonat entfernt wurden. Die Destillation erfolgte zunächst bei 150°C für 4 h und wurde bei 180°C für weitere 4 h fortgesetzt. Danach wurde die Temperatur auf 130°C zurückgenommen und der Druck auf < 20 mbar abgesenkt. Zusätzlich wurde hierzu ein Stickstoffstrom (2_l/h) durch das Reaktionsgemisch hindurchgeleitet. Schließlich wurde die Temperatur von 130°C auf 180°C erhöht mit der Maßgabe, dass die Kopftemperatur 60°C nicht überstieg. Bei dieser Temperatur wurde das Reaktionsgemisch 6 h gehalten. Die im Anschluss bestimmte Hydroxylzahl (OHZ) von 18,8 mg KOH/g zeigte, dass die Hydroxylkonzentration im Oligocarbonat noch zu hoch lag. Daraufhin wurde bei einer Ölbadtemperatur von 120°C weitere 100 g Dimethylcarbonat zugesetzt und 2 h lang unter Rückfluss gehalten. Danach erfolgte eine Destillation von Nebenprodukt und überschüssigem Dimethylcarbonat bei 150°C für 2 h. Schließlich wurde die Temperatur innerhalb von 6 h auf 180°C erhöht und dort 1 h gehalten.

Das resultierende Oligocarbonat wies eine Hydroxylzahl von 0 und somit eine Hydroxylkonzentration von < 0,05 mol-% auf.

Zu dem erhaltenen Oligocarbonat wurden 48,5 g 1,3-Butandiol zugesetzt und 8 h bei 180°C gerührt wobei Methanol als Nebenprodukt aus dem Reaktionsgemisch entfernt wurde. Es resultierte ein wachsartiges Oligocarbonatdiol mit folgenden Kennzahlen:
Hydroxylzahl (OHZ): 53,0 mg KOH/g
Mₙ: 2100 g/mol
Hydroxylfunktionalität: 1,97
Anteil an endständig sekundären Hydroxylgruppen: 75 mol-%
Viskosität: 3500 mPa·s bei 75 °C

### Vergleichsbeispiel

314,5 g 1,3-Butandiol wurden in einem Mehrhalskolben mit Rührer und Rückflusskühler auf 120°C aufgeheizt und 2 h bei 20 mbar entwässert. Anschließend wurde unter Stickstoff beschleierung das Ölbad auf 110°C abgekühlt, 0,08 g Ytterbium(III)acetylacetonat zugesetzt und innerhalb von 20 Minuten 444,5 g Dimethylcarbonat zudosiert. Nach erfolgter Zugabe wurde das Reaktionsgemisch 24 h unter Rückfluss gehalten.

Danach erfolgte eine Destillation des Reaktionsgemisches, wobei das Nebenprodukt Methanol aber auch Anteile von Dimethylcarbonat entfernt wurden. Die Destillation erfolgte zunächst bei 150°C für 4 h und wurde bei 180°C für weitere 4 h fortgesetzt. Danach wurde die Temperatur auf 130°C zurückgenommen und der Druck auf < 20 mbar abgesenkt. Zusätzlich wurde hierzu ein Stickstoffstrom (2 l/h) durch das Reaktionsgemisch hindurchgeleitet. Schließlich wurde die Temperatur von 130°C auf 180°C erhöht mit der Maßgabe, dass die Kopftemperatur 60°C nicht überstieg. Bei dieser Temperatur wurde das Reaktionsgemisch 6 h gehalten. Die im Anschluss bestimmte Hydroxylzahl (OHZ) von 348,5 mg KOH/g zeigte, dass praktisch kein Polymeraufbau stattgefunden hat. Zudem wies das entsprechende ¹H-NMR große Anteile an Nebenprodukten auf, die das Produkt verunreinigten, so dass es für weitere Umsetzungen z.B. mit (Poly)Isocyanaten ungeeignet war.

## Patentansprüche

1. Verfahren zur Herstellung von aliphatischen Oligocarbonatpolyolen mit sekundären OH-Gruppen, welche zahlenmittlere Molekulargewichte ≥ 500 g/mol aufweisen, bei dem
A) zunächst durch Umsetzung von überschüssigen Mengen organischer Carbonate mit Polyolen, welche ausschließlich primäre OH-Gruppen aufweisen, ein Polymer mit einer durchschnittlichen Konzentration an OH-Gruppen von ≤ 0,3 mol-% bezogen auf 1 mol des so erhältlichen Umsetzungsproduktes hergestellt wird,
B) die dabei freigesetzten Spaltprodukte gleichzeitig mit der Umesterungsreaktion oder anschließend zusammen mit überschüssigem, nicht umgesetzten Carbonat abgetrennt werden und in einem weiteren Schritt
C) das so gebildete Polymer mit aliphatischen Polyolen, welche jeweils pro Molekül wenigstens eine sekundäre OH-Gruppe aufweisen, umgesetzt wird, so dass ein Produkt erhalten wird, welches im Durchschnitt ≥ 5 mol-% an sekundären OH-Gruppen bezogen auf die Summe aller vorliegenden OH-Gruppen aufweist.

2. Verfahren zur Herstellung von aliphatischen Oligocarbonatpolyolen gemäß Anspruch 1, **dadurch gekennzeichnet, dass** das Polymer aus Stufe A) durchschnittlich 0 - 0,05 mol-% OH-Gruppen aufweist.

3. Verfahren zur Herstellung von aliphatischen Oligocarbonatpolyolen gemäß Anspruch 1 oder 2, **dadurch gekennzeichnet, dass** das nach Schritt C) erhaltene Oligocarbonatpolyol einen Gehalt an sekundären OH-Gruppen bezogen auf die Summe aller OH-Gruppen von 60 - 95 mol-% aufweist.

4. Aliphatische Oligocarbonatpolyole erhältlich nach einem Verfahren gemäß einem der Ansprüche 1 - 3.

5. Aliphatische Oligocarbonatpolyole gemäß Anspruch 4, **dadurch gekennzeichnet, dass** sie eine mittlere OH-Funktionalität von 1,90 - 5,0 aufweisen.

6. Aliphatische Oligocarbonatpolyole gemäß Anspruch 4 oder 5, **dadurch gekennzeichnet, dass** sie ein zahlenmittleres Molekulargewicht von 750 bis 2500 g/mol aufweisen.

7. Beschichtungen, Dispersionen, Verklebungen und/oder Abdichtungen erhältlich unter Verwendung aliphatischer Oligocarbonatpolyole gemäß einem der Ansprüche 4 - 6.

## Claims

1. Process for producing aliphatic oligocarbonate polyols having secondary OH groups and number-average molecular weights of ≥ 500 g/mol, wherein
A) a polymer having an average concentration of OH groups of ≤ 0.3 mol% relative to 1 mol of the reaction product obtainable in this way is first produced by reacting excess amounts of organic carbonates with polyols having exclusively primary OH groups,
B) at the same time as the interesterification reaction or subsequently, the cleavage products released in this process are separated off together with excess unreacted carbonate, and in a further step
C) the polymer thus formed is reacted with aliphatic polyols, each of which has at least one secondary OH group per molecule, to obtain a product which has an average of ≥ 5 mol% of secondary OH groups relative to the sum of all OH groups present.

2. Process for producing aliphatic oligocarbonate polyols according to claim 1, **characterised in that** the polymer from step A) has an average of 0 to 0.05 mol% of OH groups.

3. Process for producing aliphatic oligocarbonate polyols according to claim 1 or 2, **characterised in that** the oligocarbonate polyol obtained according to step C) has a content of secondary OH groups of 60 to 95 mol% relative to the sum of all OH groups.

4. Aliphatic oligocarbonate polyols obtainable by a process according to one of claims 1 to 3.

5. Aliphatic oligocarbonate polyols according to claim 4, **characterised in that** they have an average OH functionality of 1.90 to 5.0.

6. Aliphatic oligocarbonate polyols according to claim 4 or 5, **characterised in that** they have a number-average molecular weight of 750 to 2500 g/mol.

7. Coatings, dispersions, bonded joints and/or seals obtainable using aliphatic oligocarbonate polyols according to one of claims 4 to 6.

## Revendications

1. Procédé pour la préparation d'oligocarbonatepolyols aliphatiques avec des groupes OH secondaires, lesquels présentent des poids moléculaires moyens en nombre ≥ 500 g/mol, dans lequel
A) on prépare tout d'abord par réaction de quantités en excès de carbonates organiques avec des polyols, lesquels présentent des groupes OH exclusivement primaires, un polymère avec une concentration moyenne en groupes OH ≤ 0,3 % en mol, rapporté à une mol du produit de réaction ainsi obtenu,
B) on sépare les produits de dissociation ce faisant libérés simultanément avec la réaction de trans-estérification ou ensuite avec du carbonate en excès n'ayant pas réagi et dans une autre étape
C) on fait réagir le polymère ainsi formé avec des polyols aliphatiques, lesquels présentent à chaque fois par molécule au moins un groupe OH secondaire, de telle sorte que l'on obtient un produit qui présente en moyenne ≥ 5 % en mol de groupes OH secondaires, rapporté à la somme de tous les groupes OH présents.

2. Procédé pour la préparation d'oligocarbonatepolyols aliphatiques selon la revendication 1, **caractérisé en ce que** le polymère de l'étape A) présente en moyenne 0-0,05 % en mol de groupes OH.

3. Procédé pour la préparation d'oligocarbonatepolyols aliphatiques selon la revendication 1 ou 2, **caractérisé en ce que** l'oligocarbonatepolyol obtenu selon l'étape C) présente une teneur en groupes OH secondaires, rapporté à la somme de tous les groupes OH de 60-95 % en mol.

4. Oligocarbonatepolyols aliphatiques obtenus selon un procédé selon l'une quelconque des revendications 1-3.

5. Oligocarbonatepolyols aliphatiques selon la revendication 4, **caractérisés en ce qu'**il présentent une fonctionnalité OH moyenne de 1,90-5,0.

6. Oligocarbonatepolyols aliphatiques selon la revendication 4 ou 5, **caractérisés en ce qu'**ils présentent un poids moléculaire moyen en nombre de 750 à 2 500 g/mol.

7. Revêtements, dispersions, adhésifs et/ou étanchéités obtenus en utilisant des oligocarbonatepolyols aliphatiques selon l'une des revendications 4-6.
